# EUROPÄISCHE PATENTANMELDUNG

(11) **EP 2 050 413 A1**
(43) Veröffentlichungstag der Anmeldung: **22.04.2009**
(21) Anmeldenummer: 08017443.6
(22) Anmeldetag: 04.10.2008
(51) Int. Cl.: A61C 1/07, A61C 1/14

(54) **Ultraschall-Handstück und Werkzeug für ein solches**

(30) Priorität: 15.10.2007 DE 102007049515
(71) Anmelder: Dürr Dental AG, 74321 Bietigheim-Bissingen (DE)
(72) Erfinder: Kirstgen, Udo, 74379 Ingersheim (DE)
(74) Vertreter: Ostertag, Reinhard

(57) **Zusammenfassung**

Ein Ultraschall-Handstück (10) für Dentalanwendungen hat eine Antriebseinheit (12) zum Einleiten einer hochfrequenten Oszillationsbewegung in einen Umlenkkopf (24) und einer im Umlenkkopf (24) angeordneten Werkzeugaufnahme (30) zur Aufnahme eines auswechselbaren Werkzeugs (28). Derartige Ultraschall-Handstücke (10) und die daran anbringbaren Werkstücke (28) werden z.B. im Bereich der professionellen Zahnreinigung eingesetzt und unterliegen hohen Anforderungen an die Sicherheit und die Bedienerfreundlichkeit. Die Werkzeugaufnahme (30) hat eine Stützfläche (50, 60) und eine Feststellschraube (32), die eine zwangsweise axiale Festlegung des Werkzeug (28) in beiden axialen Richtungen ermöglichen, indem sie mit einem komplementären Schaftkopf (40) des Werkzeuges (28) zuammenarbeiten.

## Beschreibung

Die Erfindung betrifft ein Ultraschall-Handstück insbesondere für dentale und medizinische Anwendungen gemäß dem Oberbegriff des Anspruches 1 sowie ein Werkzeug für die Verwendung mit einem derartigen Ultraschall-Handstück gemäß dem Oberbegriff des Anspruches 15.

Derartige Ultraschall-Handstücke werden z.B. für dentale Zwekke, insbesondere für die Entfernung von Plaque, eingesetzt. Aus der DE 10 2005 044 074 A1 ist ein gattungsgemäßes Ultraschall-Handstück bekannt. Die Antriebseinheit dient zur Bereitstellung einer hochfrequenten Oszillationsbewegung in einem Frequenzbereich von wenigen 100 Hertz bis zu 50 kHz und mehr. Dazu weist die Antriebseinheit wenigstens ein Antriebselement aus einem piezoelektrischen oder magnetostriktiven Material auf, das bei Anlegen einer elektrischen Wechselspannung bzw. eines oszillierenden Magnetfelds eine lineare Oszillationsbewegung erzeugt.

Die Oszillationsbewegung wird in einen Umlenkkopf eingeleitet, der z.B. einer Umlenkung der Bewegungsrichtung und gegebenenfalls einer Wandlung der linearen Oszillationsbewegung dient. Das heißt, dass die in einer ersten Raumrichtung eingeleitete lineare Oszillationsbewegung in eine für die Anwendung des Werkzeugs günstige Oszillationsbewegung in einer zweiten Raumrichtung oder gegebenenfalls in eine Schwenkbewegung umgewandelt wird.

Der Umlenkkopf umfaßt seinerseits einen Spannkopf, der mit einer Werkzeugaufnahme versehen ist, die die auswechselbare Anbringung von Werkzeugen ermöglicht. Bei dem bekannten Ultraschall-Handstück ist hierfür eine Spannzange vorgesehen, die einen zylindrischen Werkzeugschaft an seinem Umfang mit Klemmkräften beaufschlagt und so in der Werkzeugaufnahme festlegt.

Bei derartigen Handstücken kann die Sicherheit des Festhaltens des Werkzeuges in der Spannzange nach längerem Gebrauch dadurch beeinträchtigt sein, daß die Spannfläche der Zange durch abrasive Partikel, die einem zusammen mit dem Handstück verwendeten abrasiven Arbeitfluid zugemischt sind, die Spannfläche verschleißen. Wenn das Werkzeug nicht mehr sicher am Umlenkkopf festgelegt ist, besteht die Gefahr, dass es unter den hochfrequenten Schwingungen ganz freikommt und in den Mundraum des Patienten fällt und möglicherweise verschluckt wird.

Die Aufgabe der Erfindung besteht darin, ein Ultraschall-Handstück gemäß dem Oberbegriff des Anspruchs 1 und ein zugehöriges Werkzeug im Hinblick auf die Betriebssicherheit zu verbessern.

Diese Aufgabe ist durch ein Ultraschall-Handstück mit den Merkmalen des Anspruchs 1 und durch ein Werkzeug mit den Merkmalen des Anspruchs 15 gelöst.

Die gemäß dem Anspruch 1 vorgesehene formschlüssige Fixierung des Werkzeuges in der Aufnahme des Spannkopfes ist vorteilhaft, da mechanische Toleranzen für die Werkzeugaufnahme und das Werkzeug größer gewählt werden können, als dies für die aus dem Stand der Technik bekannte Reibschluß-Fixierung des Werkzeugs mittels einer Spannzange der Fall ist. Damit wird eine kostengünstigere Herstellung der Werkzeuge und der Werkzeugaufnahme erreicht. Auch führen nachträgliche verschleißbedingte Abmessungsänderungen der Werkzeugaufnahme nicht zu einer Beeinträchtigung der Sicherheit.

Die Stützfläche an der Werkzeugaufnahme tritt mit einer korrespondierenden Anlagefläche des Werkzeugs zumindest während einer Halbschwingung, also einer Vor- oder Rückwärtsbewegung der Werkzeugaufnahme in Kontakt. Dadurch wird eine flächige, reibkraftunabhängige Kraftübertragung ermöglicht.

Durch die Erfindung wird auch die Bedienerfreundlichkeit des Handstückes verbessert, da das Werkzeug leichter einzusetzen ist.

Vorteilhafte Weiterbildungen der Erfindung sind Gegenstand von abhängigen Ansprüchen.

Vorzugsweise sind die Stützfläche und die korrespondierende Oberfläche am Werkzeug so ausgerichtet, dass zumindest eine Vorschubbewegung des Werkzeugs in Richtung der zu behandelnden dentalen Oberfläche durch die Stützfläche abgestützt wird. Dabei ist vorteilhaft, wenn eine Flächennormale auf der Stützfläche zumindest eine Komponente in Richtung der zu übertragenden Kraft aufweist.

Besonders vorteilhaft ist es, wenn die Flächennormale der Stützfläche zumindest im Wesentlichen parallel zur Richtung der zu übertragenden Kraft ausgerichtet ist.

Bei einer besonders bevorzugten Ausführungsform der Erfindung sind mehrere Stützflächen vorgesehen, die eine Abstützung des Werkzeugs zumindest in den Hauptrichtungen der beim Einsatz des Ultraschall-Handstücks auftretenden Kräfte ermöglichen.

Bei der Weiterbildung der Erfindung gemäß dem Anspruch 2 ist vorteilhaft, dass das Werkzeug in vorgegebener Weise in der Werkzeugaufnahme positioniert ist. Zudem ist vorteilhaft, dass die Reaktionskräfte, die durch Wechselwirkung des Werkzeugs mit den dentalen Oberflächen hervorgerufen werden, unmittelbar flächig über die Stützflächen in die Werkzeugaufnahme des Umlenkkopfs eingeleitet werden.

Hierbei ist insbesondere zu berücksichtigen, dass während des Gebrauchs des Ultraschall-Handstücks üblicherweise ein mit abrasiven Partikeln versetztes Arbeitsfluid eingesetzt wird. Dieses Arbeitsfluid kann auch in den Bereich der Werkzeugaufnahme gelangen und kann hier aufgrund der hochfrequenten Oszillationsbewegungen Verschleißerscheinungen an Werkzeugaufnahme und/oder Werkzeug hervorrufen. Da die Formschlussverbindung zwischen Werkzeug und Werkzeugaufnahme selbstnachstellend ist, führt ein solcher Verschleiß nicht oder nur sehr langsam zu einer Beeinträchtigung der Funktion von Werkzeug und Werkzeugaufnahme.

Bei der Weiterbildung der Erfindung gemäß dem Anspruch 3 und 4 ist vorteilhaft, dass dadurch eine selbsttätige Zentrierung des Werkzeugs am Umlenkkopf erreicht wird. Vorzugsweise ist das Werkzeug ebenfalls mit einem zur Werkzeugaufnahme korrespondierenden Konusbereich versehen. Der Konusbereich tritt in flächige Anlage mit der bereichsweise konisch geformten Ausnehmung und gewährleistet dadurch die gewünschte Ausrichtung des Werkzeugs gegenüber dem Umlenkkopf.

Bei der Weiterbildung der Erfindung gemäß dem Anspruch 5 ist vorteilhaft, dass hierdurch ein einfaches Einsetzen und Entnehmen des Werkzeugs ermöglicht wird.

Bei der Weiterbildung der Erfindung gemäß dem Anspruch 5 ist ferner vorteilhaft, dass eine Durchgangsbohrung einfach zu reinigen ist. Dies ist in Anbetracht des häufig verwendeten, mit abrasiven Werkstoffpartikeln versetzten Arbeitsfluids von großer Bedeutung, um den Verschleiß der Werkzeugaufnahme im Umlenkkopf und des darin einzusetzenden Werkzeugs gering zu halten. Durch die wenigstens zwei unterschiedlichen Querschnitte der Ausnehmung wird der für die formschlüssige Aufnahme des Werkzeugs notwendige Hinterschnitt gebildet. Hierbei kann ein stufenloser Übergang zwischen den beiden unterschiedlichen Querschnitten vorgesehen sein, wie dies bei einer ausschließlich konisch gestalteten Ausnehmung der Fall ist. Alternativ kann auch ein abschnittsweise konischer Übergang zwischen einer ersten zylindrischen Bohrung und einer zweiten zylindrischen Bohrung oder ein Stufenübergang zwischen den Bohrungen vorgesehen sein.

Bei der Weiterbildung der Erfindung gemäß dem Anspruch 6 ist vorteilhaft, dass der Spannkopf eine einfache Gestaltung aufweisen kann, und trotzdem eine formschlüssige Festlegung des Werkzeugs in beiden axialen Richtungen erhalten wird, was durch das separat ausgeführte Blockierelement möglich wird. Das Blockierelement stellt mit seiner Endfläche eine zweite Anschlagfläche für eine Kraftübertragung zwischen dem Umlenkkopf und dem Werkzeug in der zweiten axialen Richtung bereit. Vorzugsweise wird das Werkzeug mit Hilfe des Blockierelements in der Werkzeugaufnahme spielfrei festgelegtt, um Relativbewegungen zwischen Werkzeug und Werkzeugaufnahme zu verhindern.

Bei der Weiterbildung der Erfindung gemäß dem Anspruch 7 ist eine benutzerfreundliche Bedienung gewährleistet. Beim Verschrauben des Blockierelements mit dem Spannkopf wird die Keilwirkung der ineinander greifenden Gewinde genutzt, so dass eine zuverlässige, belastungsfähige Festlegung des Werkzeugs bereits mit geringen Bedienkräften sichergestellt ist.

Vorzugsweise wird das Blockierelement unter Verwendung eines Drehmomentschlüssels mit dem Umlenkkopf verschraubt, um eine, reproduzierbare Festlegung des Werkzeugs herbeizuführen. Durch das Verschrauben des Blockierelements mit einem vorgebbaren Drehmoment ist ein Ausgleich von Toleranzen und Verschleißerscheinungen an Werkzeug, Blockierelement und Werkzeugaufnahme möglich, also ein automatisches Nachstellen der Werkzeug-Spanneinrichtung.

Im Verschleißfall können das Blockierelement und das Werkzeug auch leicht und kostengünstig ausgetauscht werden. Aufwendige Nacharbeiten an der Werkzeugaufnahme des Werkzeugkopfes sind zur Aufrechterhaltung der Betriebssicherheit nicht erforderlich.

Selbst wenn das Blockierelement nicht ordnungsgemäß mit dem Umlenkkopf verschraubt sein sollte, ist durch die formschlüssige Aufnahme des Werkzeugs in der Werkzeugaufnahme dennoch eine sichere Handhabung des Ultraschall-Handstücks gewährleistet, da das Werkzeug nicht aus der Werkzeugaufnahme fallen kann. Bei lockerem Werkzeug treten zusätzliche Schwingungen des Werkzeugs und gegebenenfalls des Blockierelements auf, und die entsprechenden Geräusche zeigen dem Benutzer an, dass Maßnahmen zur korrekten Verschraubung des Blockierelements getroffen werden sollten.

Bei einer Lockerung des Werkzeugs wird auch der Wirkungsgrad der Ultraschallübertragung rapide verringert, ohne dass das Werkzeug aus der Werkzeugaufnahme fallen kann. Dadurch wird dem Benutzer ein weiterer Hinweis daraufhin gegeben, dass das Werkzeug locker ist, ohne dass weitere Konsequenzen eintreten.

Die Gewindesteigung am Blockierelement ist vorzugsweise so ausgewählt, dass Selbsthemmung auftritt, d.h. das Blockierelement kann sich trotz der am Werkzeug auftretenden Reaktionskräfte nicht selbsttätig lösen.

Bei der Weiterbildung der Erfindung gemäß dem Anspruch 8 ist vorteilhaft, dass das Werkzeug aus der Ausnehmung entnommen werden kann, ohne das Blockierelement vollständig entfernen zu müssen. Dies hat den Vorteil, dass Risiken durch Fehlbedienungen des Blockierelements, beispielsweise durch falsches Ansetzen des Blockierelements am Gewinde des Umlenkkopfs oder durch Verlust des Blockierelements, entfallen.

Bei der Weiterbildung der Erfindung gemäß dem Anspruch 9 ist vorteilhaft, das ein Entnehmen aus der Werkzeugaufnahme oder ein Einsetzen des Werkzeugs in die Werkzeugaufnahme nur dann vorgenommen werden kann, wenn das Blockierelement absichtlich vom Bediener aus der Verriegelungsstellung in eine Freigabestellung überführt wird.

Bei einem Handstück gemäß Anspruch 10 ist das Blockierelement seinerseits durch flächigen Reibschluß mit dem Ende des Werkzeuges in der Verriegelungsstellung gesichert.

Bei der Weiterbildung der Erfindung gemäß dem Anspruch 11 ist vorteilhaft, dass die beim Verschrauben des Werkzeugs auftretenden Kräfte bedingt durch die Werkstoffauswahl für das Blokkierelement und für den Umlenkkopf in erster Linie zu einem Verschleiß des Blockierelements führen. Da das Blockierelement kostengünstig ausgetauscht werden kann, ist gewährleistet, dass auch bei häufigem Werkzeugwechsel der Verschleiß des wegen Materialwahl und aufwendiger Bearbeitung teuren Spannkopfs gering bleibt.

In nochmals weiterer Fortbildung der Erfindung gemäß Anspruch 12 sind die Größen und Reibpaarungen bei den beiden axialen Spannflächen-Paarungen der Werkzeugspannung so gewählt, dass die Reibungskräfte zwischen Blockierlement und Werkzeugende kleiner sind als die Reibungskräfte zwischen Werkzeugschaft und Werkzeugaufnahme. Damit bleibt die Umfangsorientierung eine Werkzeuges beim Festspannen erhalten, was bei nicht rotationssymmetrischen Werkzeugen von Interesse ist.

Gemäß Anspruch 13 kann eine Abweichung zwischen den Konuswinkeln der konischen Spannflächen von Werkzeug und Werkzeugaufnahme im Bereich von 0 bis 5° vorgesehen. Dabei ist vorzugsweise der Konuswinkel des Werkzeugs größer gewählt als der Konuswinkel der Werkzeugaufnahme. Dadurch wird eine schmale ringförmige Berührung zwischen Werkzeug und Werkzeugaufnahme erreicht, durch die beim Verschrauben des Blockierelements ein Mitdrehen des Werkzeugs verhindert wird. Dies kann insbesondere bei asymmetrisch geformten Werkzeugen von Interesse sein.

Gemäß Anspruch 14 wird eine korrekte umfangsmäßige Ausrichtung des Werkzeugs gegenüber der Werkzeugaufnahme durch Umfangs-Formschluss erreicht.

Gemäß einem weiteren Aspekt der Erfindung ist ein Werkzeug mit den Merkmalen des Anspruchs 15 vorgesehen, bei dem mit Hilfe des Schaftkopfes in einfacher Weise eine formschlüssige Verriegelung am Spannkopf des Ultraschall-Handstücks erreicht werden kann.

Für ein Werkzeug gemäß Anspruch 16 werden die auch schon für Anspruch 13 genannten weiteren Vorteile erhalten.

Bei der Weiterbildung der Erfindung gemäß dem Anspruch 17 ist vorteilhaft im Hinblick auf eine reibschlüssige in Umfangsrichtung wirkende Verbindung von Blockierelement und Werkzeug.

Denkbar ist auch, dass das Werkzeug und die Werkzeugaufnahme mechanisch codiert sind, beispielsweise durch eine Abflachung im Bereich des am Werkzeug umlaufenden Schaftkopfes und einen korrespondierenden Steg in der Ausnehmung der Werkzeugaufnahme. Hierdurch wird eine korrekte Ausrichtung des Werkzeugs gegenüber der Werkzeugaufnahme durch zusätzliche Formschlusswirkung erreicht.

Nachstehend werden Ausführungsbeispiele der Erfindung anhand der Zeichnung näher beschrieben. In dieser zeigen:
- Figur 1: eine perspektivische Darstellung eines Ultraschall-Handstücks für Dentalanwendungen in einem Gebrauchs-zustand;
- Figur 2: eine perspektivische Explosionsdarstellung des Ultraschall-Handstücks gemäß der Figur 1;
- Figur 3: einen Längsmittelschnitt des Ultraschall-Handstücks gemäß der Figur 1;
- Figur 4: eine vergrößerten Ausschnitt der Schnittdarstellung gemäß der Figur 3;
- Figur 5: einen nochmals vergrößerten Schnitt durch einen Werkzeug-Spannkopf des Ultraschall-Handstückes gemäß den Figuren 1 bis 4; und

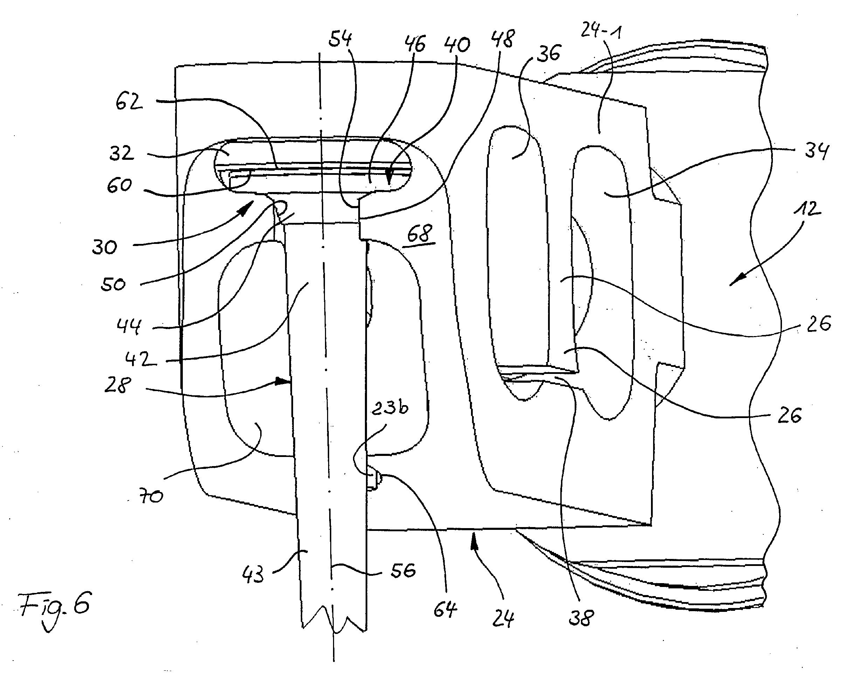

- Figur 6: eine perspektivische Endansicht des Ultraschall-Handstücks mit eingesetztem Werkzeug schräg von vorn gesehen
- Figur 7: einen leicht perspektivischen Längsmittelschnitt durch den Koppelkopf einer weiteren Ausführungsform eines Ultraschall-Handstücks,
- Figur 8: eine Ansicht von unten auf das Ultraschall-Handstück gemäß der Figur 7.

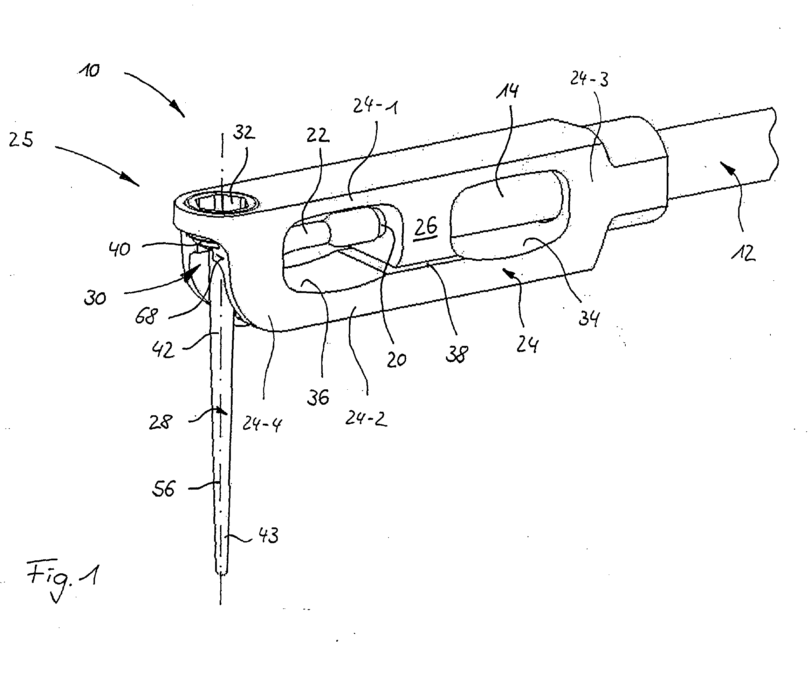

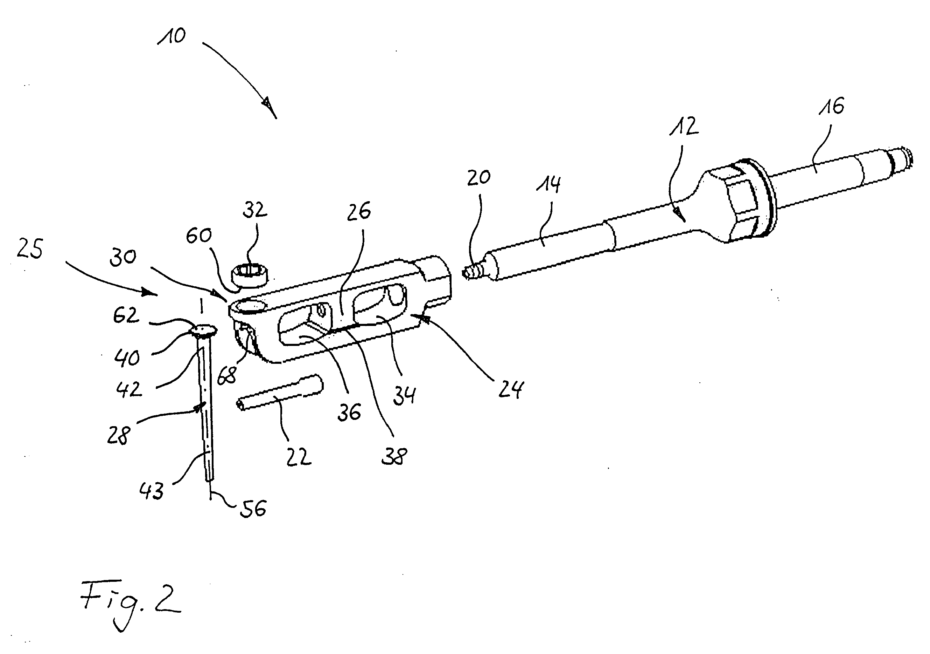

Ein in den Figuren 1 und 2 dargestelltes Ultraschall-Handstück 10 für Dentalanwendungen weist eine Antriebseinheit 12 auf, die einen nicht näher dargestellten Ultraschallschwinger enthält. Der Ultraschallschwinger ist aus einem Stapel von zylinderabschnittsförmigen, piezoelektrischen Elementen aufgebaut und kann durch eine nicht dargestellte Betriebsschaltung zur Erzeugung von translatorischen Oszillationsschwingungen elektrisch angeregt werden.

Die translatorischen Oszillationsschwingungen treten parallel zur Längsachse der Antriebseinheit 12 auf und werden auf eine Sonotrode 14 geleitet, die mit einem Piezoantrieb 16 verbunden ist.

Auf das Ende der Sonotrode 14 ist ein einstückig ausgebildeter, aus gut schwingendem Metall wie Titan hergestellter Umlenkkopf 24 mit einem mittigen Koppelsteg 26 aufgeschraubt. Damit führt die von der Sonotrode 14 übertragene translatorische Oszillationsbewegung zu einer bereichsweisen transversalen elastischen Biegung der in Figur 1 horizontalen schwächeren Balken 24-1, 24-2 des Umlenkkopfs 24, die gleiche Länge und im wesentlichen gleichen Querschnitt haben.

Zugleich werden vertikale Arme 24-3 und 24-4 des Umlenkkopfes 24, die größere Dicke haben, im wesentlichen senkrecht zur Längsachse des Gerätes bewegt. Die Oszillationsbewegung des Balkens 24-4 wird zum Antreiben eines endseitig am Umlenkkopf 24 anbringbaren Werkzeuges 28 genutzt. Hierzu ist der Balken 24-4 als Spannkopf 25 ausgebildet.

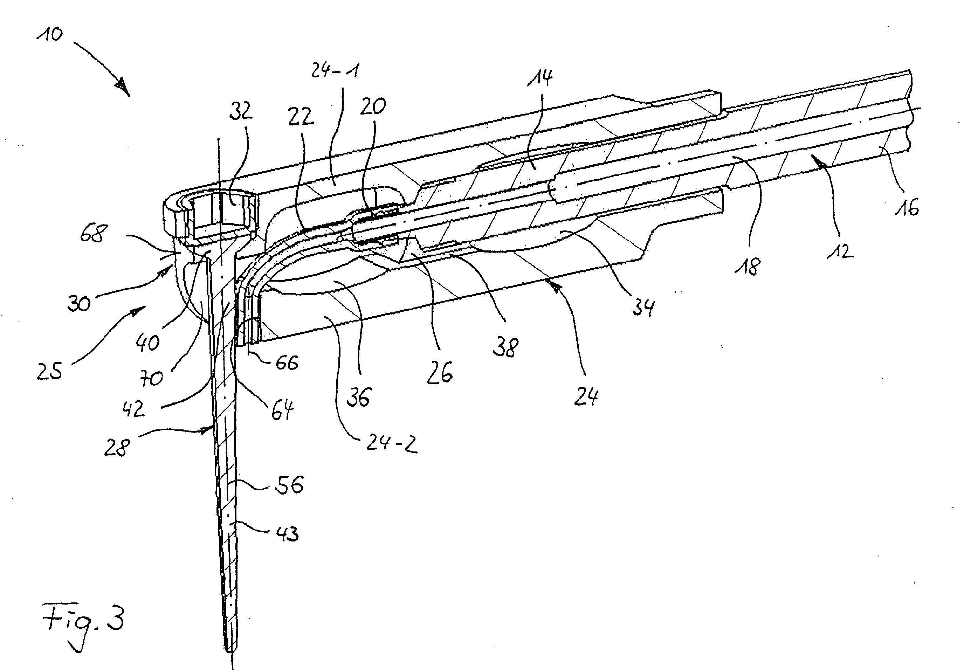

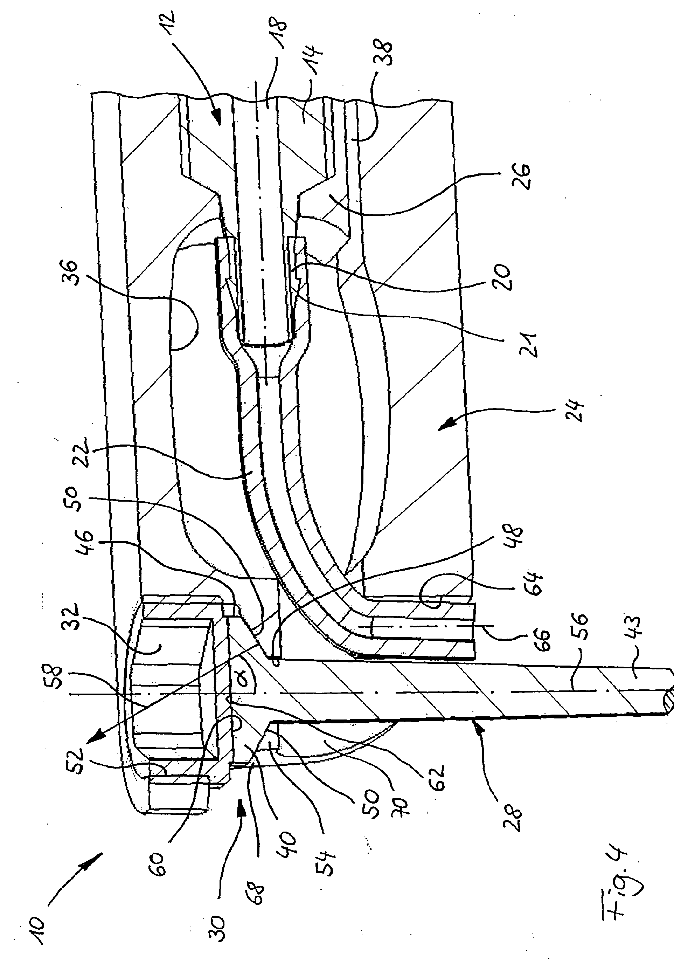

Das Werkzeug 28 ist dabei in einer Werkzeugaufnahme 30 aufgenommen, die anhand der Figuren 3 und 4 nachstehend näher beschrieben wird. Zur Festlegung des Werkzeugs 28 in der Werkzeugaufnahme ist eine Feststellschraube 32 vorgesehen, die mit ihrem Außengewinde in ein korrespondierend ausgeführtes Innengewinde 33 des Umlenkkopfs 24 einschraubbar ist.

Durch die Sonotrode 14 erstreckt sich eine in der Figur 3 näher dargestellte Axialbohrung 18, die als Zuführkanaleinrichtung für ein Arbeitsfluid dient. Endseitig ist an der Sonotrode 14 ein Schlauchstutzen 20 angebracht, der mit der Axialbohrung 18 in Verbindung steht und der außen mit konusförmigen Rippen versehen ist, die zur Festlegung eines Schlauchs 22 aus einem elastischen Material vorgesehen sind, wie nachstehend näher beschrieben wird.

Wie aus den Figuren 3 und 4 entnommen werden kann, handelt es sich bei dem Umlenkkopf 24 um ein einstückiges Metallteil, das zwei Durchbrüche 34, 36 mit einem jeweils im Wesentlichen rechteckig-ovalen Querschnitt aufweist. Zwischen ihnen liegt der Koppelsteg 26, der vom in der Nachbarschaft des Balkens 24-21 durch einen drurchgehenden Schlitz 38 aufwebeabstandet ist.

Durch die Durchbrüche 34, 36 bzw. die Balken 24-1 bis 24-4 und die Elastizität des Metallmaterials, aus dem der Umlenkkopf 24 hergestellt ist, wird ein schwingungsfähiger Rahmen gebildet, der
die in der Geräteachse erfolgende und über den Koppelsteg 26 eingeleitete Oszillationsbewegung des Ultraschallschwingers in eine zur Geräteachse senkrechte Oszillationsbewegung des Werkzeugs 28 umgesetzt.

Das Werkzeug 28 hat einen zylindrischen Schaftabschnitt 42 und einen sich zum freien Ende hin verjüngenden Arbeitsabschnitt.

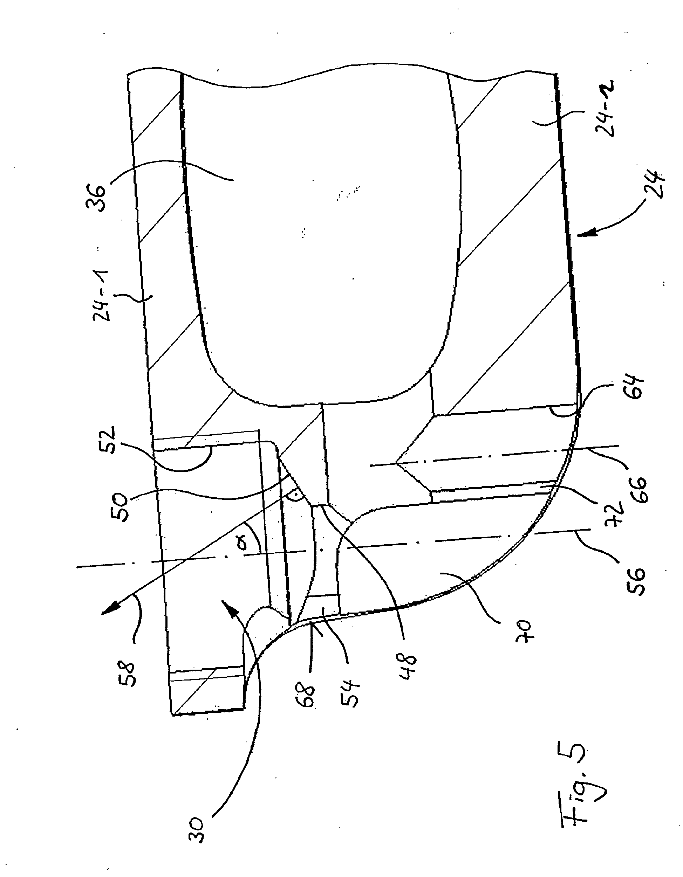

Es wird nun insbesondere auf die Figuren 2 bis 5 Bezug genommen, die Einzelheiten des Spannkopfes 25 und des Einspannendes des Werkzeuges 28 zeigen.

Zur Festlegung des Werkzeugs 28 am Spannkopf 25 weist der Schaftabschnitt 42 einen rotationssymmetrischen Schaftkopf 40 auf, der eine konusförmige in der Zeichnung untere Anlagefläche 44 und eine sich daran anschließenden zylindrische Umfangsfläche 46 hat. Die Werkzeugaufnahme 30 weist ihrerseits eine an den Maximaldurchmesser des Werkzeugschafts 42 angepasste Bohrung 48 auf, durch die der Werkzeugschaft 42 hindurchgesteckt werden kann.

An die Bohrung 48 schließt sich eine konusförmige Stützfläche 50 an, die als Auflagefläche für die Anlagefläche 44 des Werkzeugs 28 dient. Die Stützfläche 50 geht in eine Gewindebohrung 52 über, die einen größeren Durchmesser als die Bohrung 48 für den Werkzeugschaft 42 aufweist und die zur Aufnahme der Feststellschraube 32 dient.

Grundsätzlich könnte das Werkzeug 28 nach Entfernen der Feststellschraube 32 in der Zeichnung nach oben aus der Werkzeugaufnahme 30 entnommen werden. Allerdings müsste hierzu die Feststellschraube 32 vollständig entnommen werden. Dies ist aber zeitraubend und es ist hiermit auch die Gefahr eines Verlusts der Feststellschraube 32 gegeben. Zudem kann ein neuerliches Einschrauben der Feststellschraube 32 zu Handhabungsproblemen beim korrekten Ansetzen des Außengewindes der Feststellschraube führen.

Aus diesem Grund ist der Umlenkkopf 24 mit einem Entnahmeschlitz 54 versehen, der ein korrespondierend zur Längskontur des Werkzeugs 28 ausgeführtes Profil aufweist und der ausgehend von einer Stirnseite 68 des Umlenkkopfs 24 zur Werkzeugaufnahme 30 verläuft.

Der Entnahmeschlitz 54 ist dabei so angeordnet, dass das Werkzeug 28 nur dann ausgetauscht werden kann, wenn die Feststellschraube 32 um eine erhebliche Strecke aus der in den Figuren 3 und 4 dargestellten Verriegelungsposition nach oben herausgeschraubt wurde. Dadurch wird verhindert, dass bei schlechter Arretierung der Feststellschraube 32 und leichtem Lösen der Letzteren das Werkzeug 28 unbeabsichtigt aus der Werkzeugaufnahme freikommt. Das Werkzeug 28 ist also bei zumindest nahezu korrekter bzw. vollständig korrekter Verschraubung der Feststellschraube 32 in beiden axialen Richtungen formschlüssig in der Werkzeugaufnahme 30 festgelegt.

Bei flächiger Anlage der Feststellschraube 32 am Werkzeug 28 ist eine spielfreie Festlegung des Werkzeugs 28 in der Werkzugaufnahme 30 und eine reibschlüssige Verriegelung des Festell-schraube 32 in seinihrer Verriegelungsposition gewährleistet. Hierzu sind zusammenarbeitende Endflächen 60, 62 von Feststellschraube 32 und Werkzeugschaft 42 beide eben und senkrecht zur Achse der Werkzeugaufnahme 30.

Mit dem Lösen der Feststellschraube 32 wird zunächst die spielfreie AufnahmeFixierung des Werkzeugs 28 in der Werkzeugaufnahme 30 aufgehoben, jedoch ohne dass das Werkzeug 28 durch den Entnahmeschlitz 54 schon entnommen werden kann. Dies ist erst möglich, wenn die Feststellschraube 32 vom Benutzer bewusst in eine Entriegelungsstellung gebracht wird, beispielsweise durch Drehung um einige volle Umdrehungen, in der zumindest nahezu der volle Querschnitt des Entnahmeschlitzes 54 von der Feststellschraube 32 freigegeben wird. Nur wenn dies der Fall ist, kann das Werkzeug 28 durch den Entnahmeschlitz 54 aus der Werkzeugaufnahme 30 entnommen werden.

In der Werkzeugaufnahme 30 bildet die Stützfläche 50 einen ersten Hinterschnitt, durch den der Schaftkopf 40 des Werkzeugs 28 in einer ersten Axialrichtung (zur Spitze des Werkzeuges 28 hin) parallel zu seiner Mittelachse 56 festgelegt werden kann. Dabei arbeitet die Stützfläche 50 mit der Anlagefläche 44 zusammen.

Eine Flächennormale 58 der Stützfläche 50 bildet einen spitzen Winkel α zur Mittelachse 56 von Werkzeug 28 und Werkzeugaufnahme 30.

Für eine axiale Abstützung des Werkzeugs 28 am Umlenkkopf 24 in der zweiten axialen Richtung (in der Zeichnung nach oben) dient die Feststellschraube 32.

Die dem Werkzeugschaft 42 zugewandte Stirnseite 60 der Feststellschraube 32 ist ebenso wie die Oberseite 62 des Werkzeugschaftes 42 als transversale Planfläche ausgebildet und ermöglicht eine vollständige axial formschlüssige und umfangsmässig reibschlüssige Festlegung des Werkzeugs 28 am Umlenkkopf 24. Eine Flächennormale der Stirnseite 60 ist parallel zur Mittelachse 56 ausgerichtet.

Gemäß den Figuren 3, 4 und 5 ist im Umlenkkopf 24 eine Schlauch-Führungsbohrung 64 vorgesehen, deren Mittelachse 66 parallel zur Mittelachse 56 des Werkzeugs 28 und der Werkzeugaufnahme 30 verläuft und die sich ausgehend von einer Unterseite des Umlenkkopfs 24 in den Durchbruch 36 erstreckt. Genauer gesagt erfolgt dies über einen Schlitz 72, der zur Bohrung 48 hin offen ist und parallel zu dieser verläuft.

Von der Vorderseite des Umlenkkopfes 24 her ist die Führungs-bohrung 64 über einen eine Verlängerung des Entnahmeschlitzes 54 darstellenden Schlitz 70 zugänglich. Die Schlitze 70 und 72 bilden somit zusammen eine T-förmige Schlitzanordnung.

In der Führungsbohrung 64 wird ein auslaßseitiger Endbereich eines flexiblen Schlauchs 22 gehalten, dessen einlaßseitiger Endbereich am Schlauchstutzen 20 der Sonotrode 14 dicht festgelegt ist. Durch den wegen des Schlitzes 72 C-förmigen transversalen Querschnitt der Wand der Führungsbohrung 64 kann der Schlauch 22, der etwas größeren Durchmesser hat als die Bohrung 48 unter elastischer Verformung einfach vom Schlitz 72 her formschlüssig in die Führungsbohrung 64 eingeclipst werden. Durch eine nur lose formschlüssige Aufnahme des Schlauchs 22 in der Führungsbohrung 64 werden unerwünschte Schwingungsankopplungen des Schlauches 22 an den Umlenkkopf 24 und eine dadurch bedingte Erwärmung des Schlauchs 22 vermieden. Diesen Effekt kann man noch dadurch verstärken, dass man die Wandstärke des Schlauches vom einlaßseitigen Ende zum auslassseitigen Ende hin abnehmen läßt.

Durch die Antriebseinheit 12 hindurch kann ein ggf. abrasive Partikel enthaltendes Arbeitsfluid in den Schlauch 22 eingespeist werden und tritt an dem in der Führungsbohrung 64 aufgenommenen Ende des Schlauchs 22 in die Umgebung aus.

Der größte Teil des Arbeitsfluids trifft so auf das Werkzeug 28 bzw. auf die mit dem Werkzeug 28 zu bearbeitende dentale Oberfläche auf. Dadurch wird ein effizienter Einsatz des Arbeitsfluids gewährleistet, das somit punktgenau an den Einsatzort dosiert werden kann.

Eine Demontage des Schlauchs 22 wird vorzugsweise so vorgenommen, dass zunächst das Werkzeug 28 aus der Werkzeugaufnahme 30 entnommen wird, um den Schlitz 72 freizugeben. Anschließend wird der Schlauch 22 aus der Führungsbohrung 64, in die er formschlüssig eingeclipst ist, entnommen und erstreckt sich nunmehr im Wesentlichen parallel zur Längsachse des Umlenkkopfes 24. Anschließend wird der Schlauch 22 nach vorne von dem in den Durchbruch 36 hineinragenden Schlauchstutzen 20 abgezogen.

Ein neuer Schlauch 22 wird in umgekehrter Reihenfolge zunächst auf den Schlauchstutzen 20 aufgeschoben und wird dann um 90° gebogen abgewinkelt und in die Führungsbohrung 64 eingeclipst.

Der Schlauch 22 ist vorzugsweise aus einem Elastomer, insbesondere einem weichen Silikonmaterial, hergestellt , also einem flexiblen Kunststoffmaterial. Besonders vorteilhaft ist es, wenn die Wandstärke des Schlauchs auf den durch den Abstand und die Ausrichtung des Schlauchstutzens 20 und der Führungsbohrung 64 bestimmten Biegeradius abgestimmt ist, so dass der Schlauch 22 nicht kollabiert, was und den Strom des Arbeitsfluids behindern würdet.

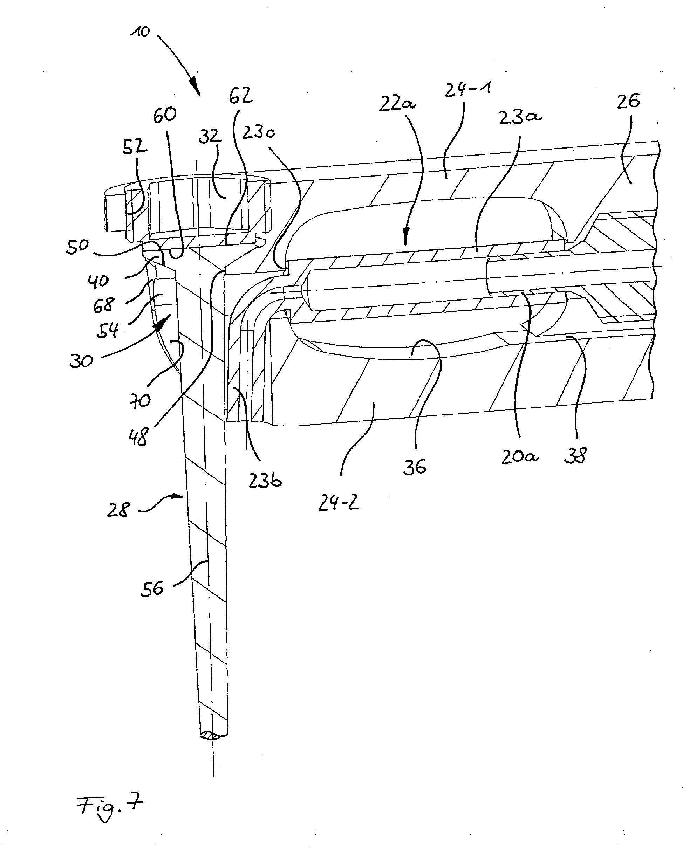

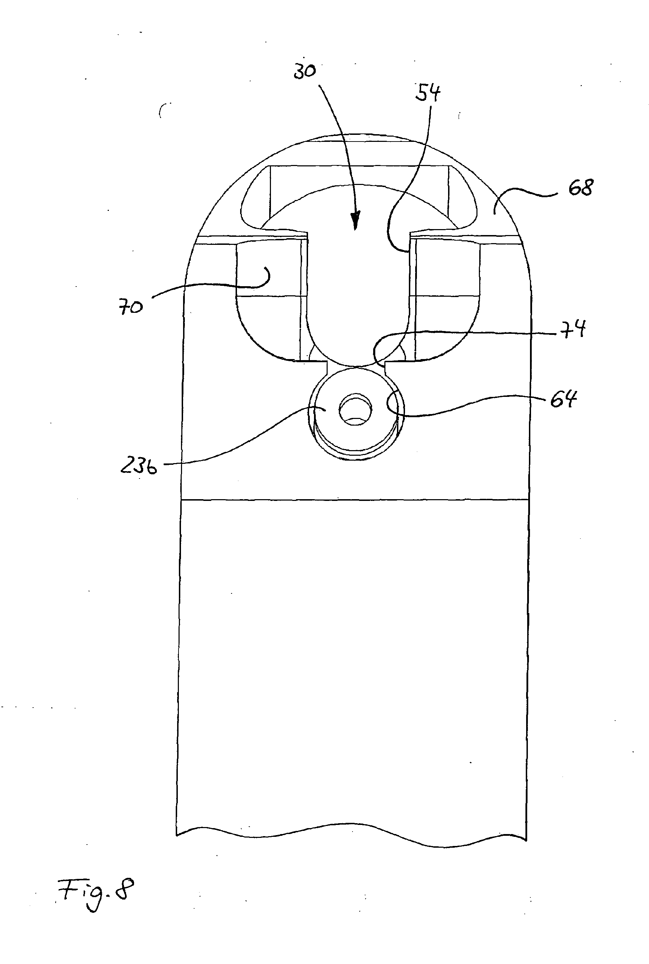

Die in den Fig. 7 und 8 dargestellte Ausführungsform des Schlauchs 22a unterscheidet sich von dem obenstehend beschriebenen Schlauch 22 durch abschnittsweise unterschiedliche Radien bzw. Durchmesser. Ein zum Aufstecken auf den frei von Sicherungsrippen ausgeführten, zylinderhülsenförmigen Schlauchstutzen 20a vorgesehener Koppelabschnitt 23a des Schlauchs 22a weist einen auf den Schlauchstutzen 20a angepassten Innendurchmesser auf. Damit kann der Schlauch 20a nahezu kraftfrei auf den Schlauchstutzen 22a aufgeschoben werden.

Die Wandstärke des Koppelabschnitts 23a entspricht im Wesentlichen der Wandstärke des sich daran anschließenden Austrittsabschnitts 23b. Bedingt durch den größeren Radius bzw. Außendurchmesser des Koppelabschnitts 23a kann dieser trotz der aus Gründen einer vereinfachten Montage kurz gehaltenen freien Länge des Schlauchstutzens 20a die Distanz bis zum vorderen Ende des Durchbruchs 36 freitragend überspannen und bedarf keiner weiteren Abstützung am Umlenkkopf 24.

Der sich an den Koppelabschnitt 23a anschließende Austrittsabschnitt 23b weist einen geringeren Radius bzw. Außendurchmesser als der Koppelabschnitt 23a auf und ist bereits in die in Fig. 7 dargestellte Krümmung vorgeformt, um eine möglichst kontaktfreie Aufnahme in der Führungsbohrung 64 zu gewährleisten. Die Wandstärken des Koppelabschnitts 23a und des Austrittsabschnitts 23b sind zumindest im Wesentlichen gleich gewählt.

Durch die vorgeformte Ausführung des Schlauchs 22a wird eine Verdrehsicherung erreicht, so dass während des Betriebs des Ultraschall-Handstücks 10 kein unerwünschtes Verdrehen des Schlauchs 22a gegenüber dem Schlauchstutzen 20a zu erwarten ist.

Mit dem frei von Sicherungsrippen ausgeführten, zylinderhülsenförmigen Schlauchstutzen 20a ist ein einfaches Aufstecken und Abnehmen des Schlauchs 22a gewährleistet, da keine lokale Deformation des Koppelabschnitts 23a zum Aufschieben auf den Schlauchstutzen 20a erfolgen muss. Die achsiale Länge des Koppelabschnitts 23a ist so bemessen, dass bei vollständig auf den Schlauchstutzen 20a aufgeschobenem Schlauch 22a ein Luftspalt zwischen einer Stirnfläche 23c des Koppelabschnitts 23a und der Innenfläche des Durchbruchs 36 vorliegt. Dieser Luftspalt ist derart bemessen, dass auch bei einer Maximalamplitude des Umlenkkopfs 24 keine, zumindest keine nennenswerte Berührung der Stirnfläche 23c und dem Umlenkkopf 24 stattfindet. Dadurch wird eine unerwünschte Übertragung von Ultraschallenergie vom Umlenkkopf 24 auf den Schlauch 22a vermindert bzw. verhindert.

Nach Einsetzen des Werkzeugs 28in den Umlenkkopf 24 wird anhand der Geometrie des Koppelabschnitts 23a ein Entnehmen aus dem Durchbruch verhindert, da der angeformte, gekrümmte Austrittsabschnitt 23b derart in der bereichsweise vom Werkzeug 28 verschlossenen Schlauch-Führungsbohrung 64 aufgenommen ist, dass kein Entweichen möglich ist.

Aus der Fig. 8 ist die Gestaltgebung der Schlauch-Führungsbohrung 64 zu entnehmen, die sich an den Schlitz 70 anschließt und ein Entnehmen des Schlauchs 22a durch BegradiZurückbiegen des abgewinkelt geformten Austrittsabschnitts 23b in Richtung auf die Achse des Koppelabschnittes 23a ermöglicht. Um eine Beschädigung des Austrittsabschnitts 23b zu vermeiden, ist der zwischen dem Schlitz 70 und der Schlauch-Führungsbohrung 64 ausgebildete Spalt 74 mit parallel zueinander ausgerichteten Wandabschnitten geformt, so dass keine scharfen Kanten vorliegen. Aus der Fig. 8 ist ebenfalls erkennbar, dass der Austrittsabschnitt 23b einen geringeren Radius bzw. Aussendurchmesser als die Schlauch-Führungs-bohrung 64 aufweist, um eine Übertragung von Ultraschallenergie vom Umlenkkopf 24 auf den Schlauch 22a zu vermeiden.

Bei einer nicht dargestellten weiteren Ausführungsform der Erfindung kann der Schlauch 22 mit einem im Schlauchmaterial integrierten Verstärkungsmaterial, insbesondere einem Verstärkungsgewebe aus Kunststoff oder Drahtgeflecht versehen sein, um auch bei kleinen Biegeradien einen freien Durchgang des Arbeitsfluids zu gewährleisten.

Während der Umlenkkopf 24 vorzugsweise aus dem besonders zähen und hochfesten Material Titan hergestellt ist, wird als Material für die Feststellschraube 32 Bronze, Messing oder ein Kunststoffmaterial mit hoher Dichte, insbesondere Polytetrafluorethylen (PTFE), Polyaryletherketon (PAEK) oder Polyethyletherketon (PEEK) verwendet.

Bei einer ebenfalls nicht dargestellten Ausführungsform der Erfindung sind das Werkzeug und die Feststellschraube einstükkig miteinander ausgeführt. Dies ermöglicht einen raschen Werkzeugwechsel und eine zuverlässige, formschlüssige Festlegung des Werkzeugs am Umlenkkopf.

## Patentansprüche

1. Ultraschall-Handstück (10) insbesondere für dentale und medizinische Anwendungen mit einer Antriebseinheit (12)-zum Erzeugen einer hochfrequenten Oszillationsbewegung in einen Spannkopf (25) und mit einer im Spannkopf (25) vorgesehenen Werkzeugaufnahme (30) zur lösbaren Aufnahme eines Schaftabschnittes (42) eines Werkzeugs (28), **dadurch gekennzeichnet, dass** die Werkzeugaufnahme (30) wenigstens eine Stützfläche (50) aufweist, an der eine Anlagefläche (44) des Schaftabschnittes (42) abstützbar ist.

2. Ultraschall-Handstück nach Anspruch 1, **dadurch gekennzeichnet, dass** der Schaftabschnitt (28) zumindest teilweise formschlüssig in der Werkzeugaufnahme (30) einsitzt.

3. Ultraschall-Handstück nach Anspruch 2, **dadurch gekennzeichnet, dass** die Stützfläche(50) zumindest teilweise konisch ist.

4. Ultraschall-Handstück nach Anspruch 3, **dadurch gekennzeichnet, dass** eine Mittelachse des konischen Teiles (50) der Stützfläche (50) parallel zur Achse der Werkzeugaufnahme (30) ausgerichtet ist.

5. Ultraschall-Handstück nach Anspruch 3 oder 4, **dadurch**
**gekennzeichnet, dass** die Stützfläche (50) mit einer in Richtung zum freien Ende des Werkzeuges offenen Bohrung (48) in Verbindung steht, wobei die Werkzeugaufnahme (30) vorzugsweise zwei unterschiedlichen Querschnitt aufweisende Abschnitte (46, 48) aufweist, zwischen denen die Stützfläche (50) liegt.

6. Ultraschall-Handstück nach einem der vorhergehenden
Ansprüche, **gekennzeichnet durch** ein Blockierelement (32) zum Festlegen des Werkzeugs (28) in der Werkzeugaufnahme (30).

7. Ultraschall-Handstück nach Anspruch 6, **dadurch**
**gekennzeichnet, dass** das Blockierelement (32) mit dem Spannkopf (25) verschraubbar ist, insbesondere in einem Gewinde (52) der Werkzeugaufnahme (30) läuft, das am vom Werkzeug (28) abliegenden Ende der Werkzeugaufnahme (30) ausgebildet ist.

8. Ultraschall-Handstück nach einem der Ansprüche 3 bis 7,
**dadurch gekennzeichnet, dass** der Spannkopf (25) einen mit der Ausnehmung (50) verbundenen im wesentlichen radialen Durchgang (54) aufweist, durch den der Schaftabschnitt (42) des Werkzeugs (28) in im Wesentlichen zur Achse (56) der Werkzeugaufnahme (30) senkrechter Richtung hindurchbewegbar ist, vorzugsweise nur dann, wenn die Anlagefläche (44) von der Stützfläche (50) beabstandet ist.

9. Ultraschall-Handstück nach Anspruch 8, **dadurch**
**gekennzeichnet, dass** das Blockierelement (32) in einer Verriegelungsstellung in den Querschnitt des Durchganges (54) hineinragt.

10. Ultraschall-Handstück nach einem der Ansprüche 6 bis 9
**dadurch gekennzeichnet, dass** die einander zugewandten Endflächen 60, 62) von Blockierelement (32) und Schaftabschnitt (42) eben sind und senkrecht zu den Achsen von Werkzeugaufnahme (30) und Schaftabschnitt (42) verlaufen.

11. Ultraschall-Handstück nach einem der Ansprüche 6 oder 7,
**dadurch gekennzeichnet, dass** das Blockierelement (32) zumindest in einem mit der Werkzeugaufnahme (30) in Berührung stehenden Bereich aus einem Material mit hoher Reibung auf den gegenüberliegenden Oberflächen der Werkzeugaufnahme (30) besteht, insbesondere aus einem weichen metallischen Werkstoff, bevorzugt Bronze oder Messing, oder einem hochfesten Kunststoff.

12. Ultraschall-Handstück nach einem der Ansprüche 6 bis 11,
**dadurch gekennzeichnet, dass**
die Größen und Reibpaarungen bei den beiden axialen Spannflächen-Paaren (48, 50, 60, 62) der Werkzeugspannung so gewählt sind, dass die Reibungskräfte zwischen Blockierlement (32) und Werkzeugendfläche (62) kleiner sind als die Reibungskräfte zwischen Werkzeugschaft (42) und Werkzeugaufnahme (30).

13. Ultraschall-Handstück nach einem der Ansprüche 3 bis 12,
**dadurch gekennzeichnet, dass** sich die Kegelöffnungswinkel von Stützfläche (50) und Anlagefläche (44) um einige Grad, vorzugsweise 0,1 bis 5% unterscheiden, wobei vorzugsweise der Öffnungswinkel der Anlagefläche (44) größer ist als der Öffnungswinkel der Stützfläche.

14. Ultraschall-Handstück nach einem der Ansprüche 1 bis 13,
**dadurch gekennzeichnet, dass** der Schaftabschnitt (42) und die Werkzeugaufnahme (30) mechanisch codiert sind, beispielsweise durch eine Abflachung am Werkzeugschaft (42) und einen korrespondierenden Steg in der der Werkzeugaufnahme (30).

15. Werkzeug für ein Ultraschall-Handstück nach einem der
vorhergehenden Ansprüche, mit einem Schaftabschnitt (42) zur Verriegelung an der Werkzeugaufnahme (30) und einem Arbeitsabschnitt (43), **dadurch gekennzeichnet, dass** am Schaftabschnitt (42) ein vorzugsweise rotationssymmetrischer Schaftkopf (44, 46) vorgesehen ist, der formschlüssig in die Werkzeugaufnahme (30) einsetzbar ist.

16. Werkzeug nach Anspruch 15, **dadurch gekennzeichnet, dass**
der Schaftkopf (40) zumindest bereichsweise konisch gestaltet und dass ein Konuswinkel (α) des Schaftkopfes (40) zumindest im Wesentlichen einem Konuswinkel (α) eines konischen Abschnittes (50) der Werkzeugaufnahme (30) entspricht.

17. Werkzeug nach Anspruch 15 oder 16, **dadurch gekennzeich net, dass** eine Endfläche (60) des Schaftkopfes (40) eben ist und senkrecht auf der Achse des Schaftkopfes (40) steht.
